# EUROPÄISCHE PATENTSCHRIFT

(11) **EP 4 154 286 B1**
(45) Veröffentlichungstag und Bekanntmachung des Hinweises auf die Patenterteilung: **10.07.2024**
(21) Anmeldenummer: 21729211.9
(22) Anmeldetag: 10.05.2021
(51) Int. Cl.: H01G 2/04, H01G 2/10, H01G 4/228, H01G 4/38, H01G 4/40, H01G 11/08, H01G 11/10, H01G 11/76, H01G 11/82

(54) **KONDENSATORANORDNUNG, FAHRZEUGANTRIEBS-LEISTUNGSELEKTRONIKVORRICHTUNG MIT EINER KONDENSATORANORDNUNG**
CAPACITOR ARRANGEMENT, VEHICLE DRIVE POWER ELECTRONICS DEVICE WITH A CAPACITOR ARRANGEMENT
AGENCEMENT DE CONDENSATEURS, DISPOSITIF ÉLECTRONIQUE DE PUISSANCE POUR L'ENTRAÎNEMENT D'UN VÉHICULE AVEC UN AGENCEMENT DE CONDENSATEURS

(30) Priorität: 20.05.2020 DE 102020206364
(43) Veröffentlichungstag der Anmeldung: 29.03.2023
(73) Patentinhaber: Vitesco Technologies Germany GmbH, 93055 Regensburg (DE)
(72) Erfinder: PAESLER, Thomas, 81737 München (DE); LUDWIG, Detlef, 81737 München (DE)
(74) Vertreter: Vitesco Technologies
(86) Internationale Anmeldenummer: PCT/EP2021/062282
(87) Internationale Veröffentlichungsnummer: WO 2021/233711

(56) Entgegenhaltungen:
- EP-A1- 3 549 147
- EP-A2- 2 893 620
- EP-B1- 2 893 620
- EP-B1- 3 549 147
- DE-A1- 102017 212 595
- JP-A- 2008 167 641

## Beschreibung

### Technisches Gebiet:

Die vorliegende Erfindung betrifft eine Kondensatoranordnung, speziell eine Zwischenkreis-Kondensatoranordnung, bzw. eine Kondensatoranordnung oder eine Leistungsinverter-Kondensatoranordnung, insb. für eine Leistungselektronikvorrichtung, und eine Fahrzeugantriebs-Leistungselektronikvorrichtung, insb. eine Leistungsinvertervorrichtung, speziell eine Fahrzeugantriebs-Leistungsinvertervorrichtung, mit einer genannten Kondensatoranordnung.

### Stand der Technik und Aufgabe der Erfindung:

Ringkondensatoren mit einem großen Kondensatorwickel, der ringförmig ausgebildet ist, sind bekannt und werden unter anderem (bspw. als Zwischenkreiskondensatoren) in Leistungselektronikvorrichtungen von Fahrzeugantrieben elektrisch angetriebener Fahrzeuge zum Betreiben und zum Regeln von Antriebselektromotoren der Antriebe angewendet.

Die Ringkondensatoren weisen mehrere Anschlusslaschen auf, welche positivspannungsseitige bzw. negativspannungsseitige Stromanschlüsse der jeweiligen Ringkondensatoren ausbilden. Dabei sind die Anschlusslaschen in der Regel in einer Umfangsrichtung der entsprechenden Ringkondensatoren verteilt angeordnet. Durch die Abstände zwischen den Anschlusslaschen, insb. zwischen den Plus-Anschlüssen einerseits und den Minus-Anschlüssen andererseits, spannen die elektrischen Verbindungen zu diesen Anschlusslaschen Flächen auf, welche die Induktivität der Kondensatoren erhöhen. Wird ein derartiger Ringkondensator an getakteten Halbleiterschaltern einer Leistungselektronikvorrichtung, bspw. einer Fahrzeugantriebs-Leistungsinvertervorrichtung, angeschlossen, so kann die große Induktivität bei dem Kondensator beim Schalten der Halbleiterschalter zu Schaltüberspannungen an den Halbleiterschaltern führen. Die Überspannungen an den Halbleiterschaltern können wiederum zu Funktionsstörungen gar zu Ausfällen bei den Leistungselektronikvorrichtungen führen.

Wie bei allen elektrischen Vorrichtungen üblich, besteht für die Ringkondensatoren bzw. die Leistungselektronikvorrichtungen, insb. die Leistungsinvertervorrichtungen von Fahrzeugantrieben, auch die allgemeine Anforderung an hohe Zuverlässigkeit. Damit besteht die Aufgabe der vorliegenden Anmeldung darin, eine, insb. im Hinblick auf das oben genannte Problem, zuverlässige Kondensatoranordnung bzw. eine Leistungselektronikvorrichtung bzw. eine Leistungsinvertervorrichtung eines Fahrzeugantriebs mit einer Kondensatoranordnung bereitzustellen. Die relevanten Dokumente sind DE102017212595A1, JP2008167641A, EP3549147A1 und EP2893620A2.

### Beschreibung der Erfindung:

Diese Aufgabe wird durch Gegenstände der unabhängigen Ansprüche gelöst. Vorteilhafte Ausgestaltungen sind Gegenstand der Unteransprüche.

Gemäß einem ersten Aspekt der Erfindung wird eine Kondensatoranordnung, speziell Zwischenkreis-Kondensatoranordnung, eine Inverter-Kondensatoranordnung oder eine Leistungsinverter-Kondensatoranordnung, insb. für eine Leistungselektronikvorrichtung, bspw. für eine Fahrzeugantriebs-Leistungselektronikvorrichtung, speziell für eine Fahrzeugantriebs-Leistungsinvertervorrichtung, bereitgestellt.

Die Kondensatoranordnung weist einen Kondensator auf, der einen Raum, insb. einen Hohlraum, zumindest teilweise umlaufend ausgeführt ist. Der Kondensator weist wiederum (einen oder mehrere) erste, positivspannungsseitige Stromanschlüsse (insb. in Form von Anschlusslaschen) und (einen oder mehrere) zweite, negativspannungsseitige Stromanschlüsse (insb. in Form von Anschlusslaschen) auf. Die ersten Stromanschlüsse und die zweiten Stromanschlüsse sind vorzugsweise in einer Umfangsrichtung des Raumes verteilt angeordnet.

Die Kondensatoranordnung weist ferner eine erste Stromschiene (auf Englisch "Busbar") und eine zweite Stromschiene auf. Die erste Stromschiene und die zweite Stromschiene sind insb. in dem Raum angeordnet. Die Stromschienen fluchten in einer Axialrichtung des Raumes bzw. des Kondensators mit einer Stirnseite bzw. einem Querschnitt des Raumes. Die Stromschienen erstrecken sich jeweils entlang einer Fläche, die sich durch einen Schnitt durch den Raum quer zur Axialrichtung des Raumes ergibt. Mit anderen Worten sind die Stromschienen parallel zu einer Stirnseite des Raums angeordnet oder (insb. geringfügig) schräg zur Stirnseite des Raums. Hierbei bedeutet "schräg" insbesondere, dass der Winkel zwischen der Fläche, entlang sich die jeweilige Stromschiene erstreckt, und der Erstreckungsfläche der Stirnseite, nicht mehr als 90° (vorzugsweise nicht mehr als 45° oder 30°) Raums beträgt. Dabei sind die erste Stromschiene und die zweite Stromschiene (in der Axialrichtung) insb. zueinander überlappend bzw. übereinander angeordnet und fluchten (in der Axialrichtung) miteinander überwiegend (zumindest teilweise) oder vollständig. Die erste Stromschiene ist mit den ersten Stromanschlüssen (insb. direkt) körperlich und elektrisch verbunden, bspw. verschweißt, verlötet, verschraubt, vernietet. Analog ist die zweite Stromschiene mit den zweiten Stromanschlüssen (insb. direkt) körperlich und elektrisch verbunden, bspw. verschweißt, verlötet, verschraubt, vernietet. Die Stromschienen erstrecken sich vorzugsweise von der Längsachse des Raums bis zu den Stromanschlüssen in radialer Weise, etwa sternförmig.

Insb. befinden sich sowohl die erste als auch die zweite Stromschiene in dem Raum der Kondensatoranordnung, etwa an einer Stirnseite des Raums oder zwischen den beiden Stirnseiten des Raums. Alle oder zumindest viele der ersten Stromanschlüsse sind elektrisch an die erste Stromschiene angeschlossen, insb. über jeweils einen der Kontaktabschnitte der ersten Stromschiene. Analog sind alle oder zumindest viele der zweiten Stromanschlüsse elektrisch an die zweite Stromschiene angeschlossen, insb. über jeweils einen der Kontaktabschnitte der zweiten Stromschiene.

Der Kondensator ist insb. als ein Ringkondensator (insb. mit einem zylinderförmigen Hohlraum) mit Anschlusslaschen ausgeführt, wobei die Anschlusslaschen positivspannungsseitige bzw. negativspannungsseitige Stromanschlüsse des Kondensators ausbilden. Dabei sind die Anschlusslaschen auf einer kreis- oder kreisringscheibenförmigen Bodenseite des Ringkondensators verteilt angeordnet sind. Insb. bilden je zwei Anschlusslaschen je eine Gruppe von jeweils einem positivspannungsseitigen und einem negativspannungsseitigen Stromanschluss von Kondensatorwinkeln des Ringkondensators. Dabei sind die Anschlusslaschen-Gruppen zueinander äquidistant auf der Bodenseite des Ringkondensators ringförmig verteilt angeordnet, wobei jeweils eine (bspw. positivspannungsseitige) Anschlusslasche der jeweiligen Anschlusslaschen-Gruppen von der Achse des Kondensators betrachtet hinter der anderen (bspw. negativspannungsseitigen) Anschlusslasche derselben Anschlusslaschen-Gruppen angeordnet ist.

Der Kondensator kann bspw. mehrere Kondensatorwickel aufweisen. In diesem Fall bilden die ersten, positivspannungsseitigen Stromanschlüsse positivspannungsseitige Anschlusslaschen der jeweiligen Kondensatorwickel aus. Analog bilden die zweiten, negativspannungsseitigen Stromanschlüsse negativspannungsseitige Anschlusslaschen der jeweiligen Kondensatorwickel aus. Die beiden Stromschienen verbinden die Kondensatorwickel zueinander parallel elektrisch.

Die erste und die zweite Stromschiene können zueinander parallel verlaufen. Die beiden Stromschienen sind vorzugsweise parallel zueinander angeordnet, wodurch sich gute Abstrahlungseigenschaften in Bezug auf elektromagnetische Strahlung ergeben. Insb. sind die beiden Stromschienen aus einem Metallblech, bspw. einem Kupferblech oder einem Kupferlegierungsblech, gestanzt, geschnitten oder laserstrahlgeschnitten. Die Stromschienen liegen vorzugsweise aufeinander und sind voneinander elektrisch isoliert, insbesondere mittels einer zwischenliegenden Isolationsschicht.

Die Anordnung der ersten Stromschiene und der zweiten Stromschiene (und somit die elektrischen Verbindungen zu dem Kondensator) in dem Raum der Kondensatoranordnung, wobei die Stromschienen in der Axialrichtung des Raums zueinander fluchten, ermöglicht einen bauraumsparenden Aufbau der Kondensatoranordnung und eine erhöhte Designflexibilität bei der Kondensatoranordnung, insb. dadurch, dass die elektrischen Verbindungen zu dem Kondensator durch den Raum hindurch geführt und über die beiden Stromschienen hergestellt werden können.

In dem Inneren der hier beschriebenen Kondensatoranordnung sind die Stromschienen vorgesehen, welche mit den (Enden der) Kondensatorwickel verbunden sind. Das Innere wird hier allgemein auch als "Hohlraum" (noch allgemeiner als "Raum") bezeichnet. Zu dem Inneren bzw. dem Hohlraum werden auch die Stirnseiten der Kondensatoranordnung gezählt. Die Kondensatorwickel umgeben das Innere des Kondensators bzw. der Kondensatoranordnung. Der Begriff "Hohlraum" ist insbesondere so zu verstehen, dass die Möglichkeit des Führens der Stromschienen bzw. der Stromleiter besteht. Das Innere des Kondensators kann frei sein und die Stromschienen bzw. Stromleiter aufnehmen, oder kann teilweise oder vollständig bis auf den Raum für die Stromschienen bzw. Stromleiter und ggf. weiterer Komponenten gefüllt sein (etwa mit Füllmaterial). Der Begriff "hohl" bedeutet hierbei, dass der Kondensator den betreffenden Raum umgibt, in dem die Stromschienen vorgesehen sind. Als hohl wird daher ein Raum bezeichnet werden, der keine Füllmasse aufweist, oder der in elektrischer Hinsicht hohl ist und Raum zur Führung von Leitern wie die Stromschienen und/oder die Stromleiter aufweist. Die Stromschienen bzw. die Stromleiter können frei liegen oder können vollständig oder teilweise in Füllmasse eingebettet sein. Anstatt des Begriffs "Hohlraum" kann auch der Begriff "Inneres" verwendet werden.

Der Hohlraum bzw. das Innere ermöglicht an zumindest an einer Stirnseite die Herausführung von Kontaktierungen der Stromschienen wie die Stromleiter. Diese Stirnseite kann einer Stirnseite eines Hohlzylinders entsprechen kann, dessen Körper von dem Kondensator gebildet wird. Die Stromschienen weisen Anschlusselemente für Stromleiter auf. Diese Stromleiter können sich von den Stromschienen weg zu einer Stirnseite des Hohlraums erstrecken, und können dort vorzugsweise elektrisch kontaktiert werden. Die Stromleiter führen zu einer Stirnseite der Kondensatoranordnung und erlauben damit eine sehr kurze Leitungsführung mit geringer parasitärer Induktivität und bieten damit eine günstige zentrale Anschlussmöglichkeit. Da die Stromleiter im Inneren des Kondensators verlaufen, ergibt sich durch die Kondensatorelemente eine vorteilhafte Schirmung.

Die Stromleiter verlaufen vorzugsweise parallel zueinander. Die Stromleiter liegen insbesondere aufeinander. Die Stromleiter sind vorzugsweise durch einen Isolator voneinander getrennt. Eine Isolatorbahn oder ein anderer Isolationskörper kann zwischen den Stromleitern zwischengelegt sein und die Stromleiter miteinander körperlich verbinden, vorzugsweise in direkter Weise. Die Stromleiter sind vorzugsweise entlang der Längsachse bzw. entlang einer Axialrichtung des Hohlraums bzw. des Raumes geführt. Die Stromleiter verlaufen parallel zur Längsachse oder entlang einer Richtung, die eine Richtungskomponente aufweist, die entlang der Axialrichtung führt. Die Stromanschlüsse des Kondensators können an einer Stirnseite liegen, wobei die Stromleiter zur entgegengesetzten Stirnseite führen. Die Stromanschlüsse des Kondensators können zumindest teilweise zwischen zwei Stirnseiten liegen, wobei die Stromleiter zu mindestens einer der Stirnseiten (ggf. zu unterschiedlichen Stirnseiten) führen.

Die zueinander überlappende bzw. (in der Axialrichtung) fluchtende Anordnung der beiden Stromschienen reduziert die störende Induktivität in den elektrischen Verbindungen zu dem Kondensator und somit in der gesamten Kondensatoranordnung. Bei einem Kondensator mit mehreren Kondensatorwickeln ermöglichen die beiden Stromschienen zudem eine niederinduktive parallele elektrische Verbindung der Kondensatorwickel zueinander. Durch die Parallelschaltung der Kondensatorwickel wird die Induktivität der elektrischen Verbindung zwischen den Kondensatorwickeln und somit die Gesamtinduktivität der Kondensatoranordnung reduziert. Die Führung der Stromleiter durch das Innere des als Hohlzylinder ausgebildeten Kondensators wird die Länge der elektrischen Anbindung minimiert, wodurch die Induktivität verringert werden kann, wobei sich ferner eine Abschirmung durch die Kondensatorwickel selbst ergibt.

Die oben beschriebene Kondensatoranordnung kann dank der niedrigen Induktivität in einer Leistungselektronikvorrichtung, bspw. einer Fahrzeugantriebs-Leistungsinvertervorrichtung, mit getakteten Halbleiterschaltern eingesetzt werden, wobei diese durch ihre niedrige Induktivität die Gefahr von Schaltüberspannungen an den Halbleiterschaltern und die damit verbundenen Funktionsstörungen bzw. Ausfällen bei der Leistungselektronikvorrichtung begrenzt. Damit erhöht die Kondensatoranordnung die Zuverlässigkeit der Leistungselektronikvorrichtung.

Bspw. weist die Kondensatoranordnung eine elektrisch isolierende Isolationsschicht, bspw. in Form von einer Isolationsfolie, auf, die zwischen der ersten Stromschiene und der zweiten Stromschiene angeordnet ist. Die Isolationsschicht verbindet die erste Stromschiene und die zweite Stromschiene miteinander körperlich und isoliert die erste Stromschiene und die zweite Stromschiene voneinander elektrisch. Dabei sind die erste Stromschiene, die Isolationsschicht und die zweite Stromschiene in der Axialrichtung zueinander überlappend bzw. übereinander angeordnet. Insb. liegen die beiden Stromschienen und die Isolationsschicht senkrecht zur Axialrichtung des Raumes.

Bspw. ist die erste Stromschiene im Wesentlichen sternförmig oder kreisscheibenförmig mit strahlenförmig ausgehenden ersten Kontaktabschnitten ausgeführt. Dabei sind die ersten Kontaktabschnitte jeweils mit je einem der ersten Stromanschlüsse des Kondensators körperlich und elektrisch verbunden sind. Analog ist die zweite Stromschiene bspw. im Wesentlichen sternförmig oder kreisscheibenförmig mit strahlenförmig ausgehenden zweiten Kontaktabschnitten ausgeführt. Dabei sind die zweiten Kontaktabschnitte jeweils mit je einem der zweiten Stromanschlüsse des Kondensators körperlich und elektrisch verbunden.

Bspw. weist die erste Stromschiene ein erstes elektrisches Anschlusselement zum Anschließen eines ersten Stromleiters an die erste Stromschiene und somit an den Kondensator und eine erste Aussparung zum Durchleiten eines zweiten Stromleiters zu einem zweiten elektrischen Anschlusselement auf. Analog weist die zweite Stromschiene das zweite Anschlusselement zum Anschließen des zweiten Stromleiters an die zweite Stromschiene und somit an den Kondensator und eine zweite Aussparung zum Durchleiten des ersten Stromleiters zu dem ersten Anschlusselement auf.

Dabei sind das erste Anschlusselement und die zweite Aussparung in der Axialrichtung des Raumes zueinander (zumindest teilweise) übereinander angeordnet (bzw. überlappend ausgeführt). Analog sind das zweite Anschlusselement und die erste Aussparung in der Axialrichtung des Raumes zueinander (zumindest teilweise) übereinander angeordnet (bzw. überlappend ausgeführt). Insb. sind das erste und das zweite Anschlusselement zur Bildung einer Schraubverbindung, einer Nietverbindung oder einer Pressverbindung ausgeführt.

Bspw. ist das erste Anschlusselement als eine dritte Aussparung in der ersten Stromschiene ausgebildet, wobei die dritte Aussparung einen kleinen Durchmesser aufweist als die zweite Aussparung. Entsprechend fluchtet das erste Anschlusselement als die dritte Aussparung in der Axialrichtung des Raumes mit einem Teil der zweiten Aussparung. Analog ist das zweite Anschlusselement bspw. als eine vierte Aussparung in der zweiten Stromschiene ausgebildet, wobei die vierte Aussparung einen kleinen Durchmesser aufweist als die erste Aussparung. Entsprechend fluchtet das zweite Anschlusselement als die vierte Aussparung in der Axialrichtung des Raumes mit einem Teil der ersten Aussparung.

Bspw. sind die erste und die zweite Aussparung in der Axialrichtung des Raumes zueinander teilweise fluchtend ausgeführt. Ein Bereich, der durch das teilweise Fluchten der beiden Aussparungen ähnlich wie ein Durchgangsloch durch die beiden Stromschienen entstanden ist, ist dazu eingerichtet, die beiden zuvor genannten elektrischen Leiter an den beiden Stromschienen und somit an dem Kondensator zu befestigen.

Bspw. weist der Kondensator mehrere voneinander körperlich getrennte Kondensatorelemente auf, die einen Raum umlaufend (entlang einer in sich geschlossenen Linie nebeneinander) angeordnet sind. Die Kondensatorelemente können als Kondensatorwickel ausgeführt werden. Die Stromschienen verbinden die Kondensatorelemente in Parallelschaltung miteinander.

Die mehreren voneinander körperlich getrennten Kondensatorelemente bzw. Kondensatorwickel ersetzen dabei einen sonst erforderlichen großen (ring.- oder ringabschnittsförmigen) Kondensatorwickel eines (Ring-)Kondensators. Mit anderen Worten: ein sonst groß dimensionierter Kondensatorwickel eines (Ring-)Kondensators wird in mehreren vergleichsweise kleinen voneinander körperlich getrennten Kondensatorelementen bzw. Kondensatorwickeln aufgeteilt, insb. bei einer gleichbleibenden Gesamt-Kapazität. Die thermische Ausdehnung der einzelnen, vergleichsweise kleinen Kondensatorelemente bzw. Kondensatorwickel ist (bei der gleichen Wärmeentwicklung) gering im Vergleich zur thermischen Ausdehnung eines einzigen, einstückig ausgebildeten und somit vergleichsweise groß dimensionierten Kondensatorwickels eines vergleichbaren Kondensators, und lässt sich besser kompensieren. Ferner sind die Längsachsen der Kondensatorwickel gerade. Die Kondensatorwickel sind ringförmig aneinandergereiht; die Längsachsen können hierbei ein Polygon bilden. Bspw. weist der Kondensator ferner einen Kondensatorhalter auf, der zum Tragen bzw. zum Halten der Kondensatorelemente und zum Schutz der Kondensatorelemente vor äußeren, insb. mechanischen, Einflüssen ausgeführt ist. Der Kondensatorhalter weist wiederum mehrere Halterabschnitte auf, die jeweils (mindestens) einen der Kondensatorelemente (aufnehmen und) festhalten. Ferner weist der Kondensatorhalter mehrere Verbindungsabschnitte auf, die die Halterabschnitte miteinander körperlich bzw. mechanisch verbinden und festhalten.

Dabei sind die Halterabschnitte mit den jeweiligen Kondensatorelementen direkt thermisch verbunden. Dadurch dehnen sich die Halterabschnitte unter derselben thermischen Auswirkung wie die darin gehaltenen Kondensatorelemente aus, insb. synchron zu den jeweiligen Kondensatorelementen.

Der materialbedingte Unterschied zwischen der thermischen Ausdehnung bei den Kondensatorelementen einerseits und der thermischen Ausdehnung bei den jeweiligen korrespondierenden Halterabschnitten anderseits fällt dank der kleinen Dimensionierung der einzelnen Kondensatorelemente vergleichsweise gering auf und kann somit von den jeweiligen Halterabschnitten besser kompensiert werden, ohne dass die Halterabschnitte gleich zu Bruch gehen.

Genauso können die Verbindungsabschnitte, die zwischen den Halterabschnitten angeordnet sind und diese miteinander körperlich verbinden, die thermische Ausdehnung bei den Kondensatorelementen und den Halterabschnitten (und somit des gesamten Kondensators) durch eigene thermische Ausdehnung abfedern.

Insb. sind der Kondensatorhalter und somit auch die Halterabschnitte und die Verbindungsabschnitte aus einem elektrisch isolierenden und elastischen Kunststoff oder einem elektrisch isolierenden und elastischen Material ausgebildet, und können so die thermische Ausdehnung bei den Kondensatorelementen nahezu vollständig kompensieren. Insb. ist der Kondensatorhalter einstückig ausgeführt. Bspw. ist der Kondensatorhalter in einem Spritzgießvorgang hergestellt.

Bspw. sind die Halterabschnitte und die Verbindungsabschnitte den Raum umlaufend abwechselnd angeordnet.

Bspw. umschließen die Halterabschnitte jeweils (mindestens) je eins der Kondensatorelemente in dessen jeweiligen Umfang (bzw. Umfangsrichtung) zumindest teilweise mantelförmig und bilden somit jeweils eine Ummantelung der jeweiligen Kondensatorelemente aus, die das jeweilige Kondensatorelement festhält und ggfs. vor äußeren Einflüssen, wie z. B. äußeren mechanischen Stößen, schützt.

Bspw. weisen die Halterabschnitte jeweils mindestens einen (ersten) Dehnungsausgleichsbereich auf, der im Vergleich zum Rest des jeweiligen Kondensatorhalters schmaler und/oder dünner ausgeführt und somit eingerichtet ist, eine, bspw. thermisch bedingte, Ausdehnung des jeweiligen korrespondierenden Kondensatorelements in dessen Umfangsrichtung auszugleichen. Insb. ist der Dehnungsausgleichsbereich stegförmig (in der Umfangsrichtung des jeweiligen korrespondierenden Kondensatorelements betrachtet) schmaler als der Rest des jeweiligen Halterabschnitts geformt.

Bspw. weisen die Verbindungsabschnitte jeweils mindestens einen (zweiten) Dehnungsausgleichsbereich auf, der im Vergleich zum Rest des jeweiligen Verbindungsabschnitts schmaler und/oder dünner ausgeführt ist und somit eingerichtet ist, eine, bspw. thermisch bedingte, Ausdehnung der Kondensatorelemente bzw. des Kondensators in einer Umfangsrichtung des Kondensators auszugleichen. Insb. ist der Dehnungsausgleichsbereich stegförmig (in der Umfangsrichtung des Kondensators betrachtet) schmaler als der Rest des jeweiligen Verbindungsabschnitts geformt.

Insb. sind die Verbindungsabschnitte an sich stegförmig bzw. in Form von Verbindungsstegen ausgeführt, die sich in der Umfangsrichtung des Kondensators bzw. des Raumes erstrecken und jeweils je zwei in der Umfangsrichtung des Kondensators benachbarten Halterabschnitte miteinander körperlich verbinden.

Die oben beschriebene Kondensatoranordnung kann in allen elektrischen oder leistungselektrischen Vorrichtungen eingesetzt werden, die einen Kondensator benötigen und funktionsbedingt hohen thermischen Schwankungen unterliegen.

Gemäß einem zweiten Aspekt der Erfindung wird eine Fahrzeugantriebs-Leistungselektronikvorrichtung, speziell eine Fahrzeugantriebs-Leistungsinvertervorrichtung, bereitgestellt.

Die Fahrzeugantriebs-Leistungselektronikvorrichtung weist eine zuvor beschriebene Kondensatoranordnung und einen Inverter auf, wobei der Inverter zur Umwandlung eines Gleichstromes in einen mehrphasigen Wechselstrom und/oder umgekehrt ausgeführt ist und Gleichstromanschlüsse zur Übertragung des Gleichstromes aufweist. Dabei ist die Kondensatoranordnung an den Gleichstromanschlüssen elektrisch angeschlossen. Allgemein kann eine Fahrzeugantriebs-Leistungselektronikvorrichtung vorgesehen sein, die als Zwischenkreiskondensator eine Kondensatoranordnung aufweist, wie sie hier beschrieben ist.

Kurze Beschreibung der Zeichnungen:
Im Folgenden werden beispielhafte Ausführungsformen der Erfindung bezugnehmend auf die beiliegenden Zeichnungen näher erläutert. Dabei zeigen:
Figur 1 in einer schematischen räumlichen Druntersicht einen konventionellen Ringkondensator;
Figur 2 in einer schematischen räumlichen Draufsicht ein Teil einer Kondensatoranordnung gemäß einer beispielhaften Ausführungsform der Erfindung;
Figur 3 in einer weiteren schematischen räumlichen Draufsicht die Kondensatoranordnung aus Figur 2;
Figur 4 in einer schematischen räumlichen Druntersicht die Kondensatoranordnung aus Figur 3; und
Figur 5 in einer schematischen räumlichen Draufsicht ein Teil einer Fahrzeugantriebs-Leistungsinvertervorrichtung mit einer Kondensatoranordnung aus Figur 4.

### Detailliert Beschreibung der Zeichnungen:

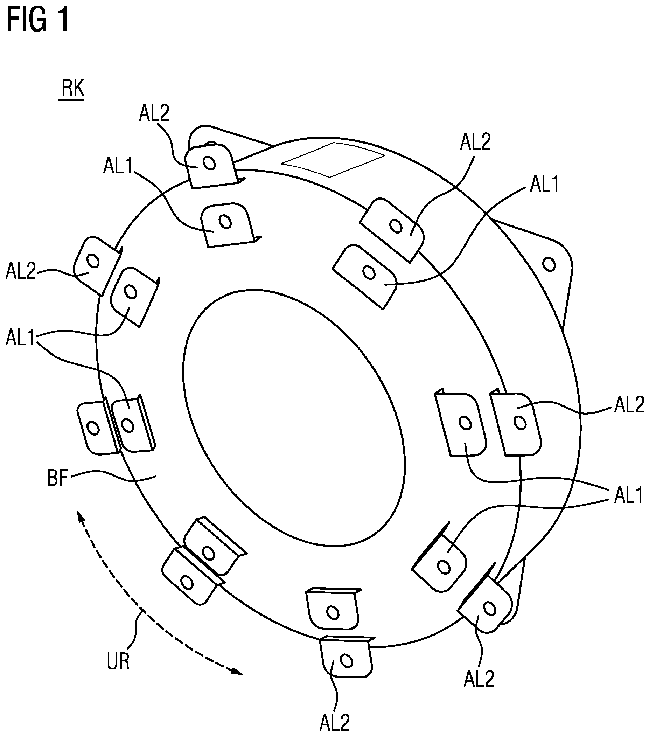

Figur 1 zeigt in einer schematischen räumlichen Druntersicht einen konventionellen Ringkondensator RK.

Der Ringkondensator RK weist einen ringförmigen Kondensatorwickelkörper auf, der in einem schützenden Gehäuse angeordnet ist. Auf einer kreisringscheibenförmigen Bodenfläche BF weist der Ringkondensator RK mehrere Anschlusslaschen-Paare aus jeweils einer innenliegenden ersten Anschlusslasche AL1 und einer außenliegenden zweiten Anschlusslasche AL2 auf, die aus dem Gehäuse herausragen und elektrische Anschlüsse des Ringkondensators RK zu externen elektrischen Vorrichtungen ausbilden. Dabei sind die Anschlusslaschen-Paare AL1, AL2 voneinander äquidistant beabstandet in einer Umfangsrichtung UR des Ringkondensators RK verteilt angeordnet. Ferner weisen die Anschlusslaschen AL1, AL2 jeweils eine Kontaktfläche auf, die sich parallel zur Bodenfläche BF flächig ausdehnen. Es besteht eine Gruppe einzelner Kondensatorkontakte, die entlang eines Innenkreises vorgesehen sind, und eine Gruppe einzelner Kondensatorkontakte, die entlang eines Außenkreises vorgesehen sind.

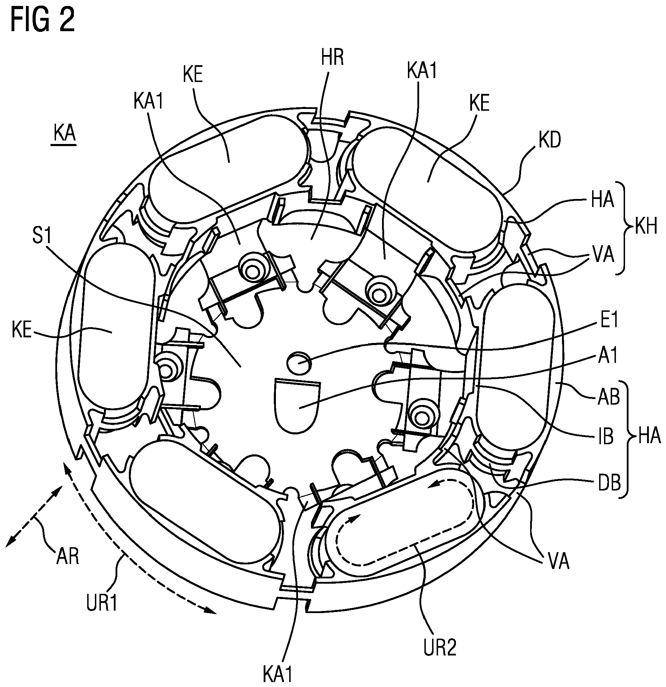

Figur 2 zeigt in einer schematischen räumlichen Draufsicht ein Teil einer Kondensatoranordnung KA gemäß einer beispielhaften Ausführungsform der Erfindung.

Die Kondensatoranordnung KA ist bspw. als ein Zwischenkreiskondensator einer Fahrzeugantriebs-Leistungsinvertervorrichtung ausgeführt. Die Fahrzeugantriebs-Leistungsinvertervorrichtung weist neben der Kondensatoranordnung KA noch einen Leistungsinverter auf. Der Leistungsinverter weist zwei Gleichstromanschlüsse auf, an denen die Kondensatoranordnung KA elektrisch angeschlossen ist.

Die Kondensatoranordnung KA weist einen Kondensator KD auf, der wiederum sechs Kondensatorelemente KE aufweist, die (als voneinander unabhängige Teile) voneinander körperlich getrennt ausgeführt sind. Dabei sind die Kondensatorelemente KE jeweils im Wesentlichen zylinderförmig mit einem im Wesentlichen ovalen Querschnitt ausgebildet und (ähnlich wie Statorsegmente eines Elektromotor-Stators) einen Hohlraum HR in dessen Umfangsrichtung UR1 umlaufend nebeneinander angeordnet. Dabei sind die Kondensatorelemente KE jeweils als ein Kondensatorwickel ausgebildet, deren Wickelachsen jeweils parallel zu einer Axialrichtung AR des Hohlraumes HR ausgerichtet sind.

Der Kondensator KD weist ferner einen Kondensatorhalter KH auf, der die Kondensatorelemente KE tragen, zusammen festhalten und ggfs. auch vor äußeren Einflüssen, wie z. B. vor äußeren mechanischen Stößen, schützt. Dabei ist der Kondensatorhalter KH aus einem elektrisch isolierenden und elastischen Kunststoff oder einem elektrisch isolierenden und elastischen Material, bspw. in einem Spritzgießvorgang, einstückig ausgebildet.

Der Kondensatorhalter KH weist sechs Halterabschnitte HA und zwölf Verbindungsabschnitte VA auf, wobei die Halterabschnitte HA und die Verbindungsabschnitte VA den Hohlraum HR umlaufend und zueinander abwechselnd angeordnet sind. Die Mittelachsen der Kondensatorelemente KE bilden jeweils ein Polygon. An den einigen oder allen Ecken des Polygons sind die Verbindungsabschnitte VA ausgebildet, die aufgrund ihrer stegförmigen Ausbildung Verformungen der Kondensatorelemente KE aufnehmen können.

Die Halterabschnitte HA sind jeweils im Wesentlichen zylindermantelförmig ausgebildet und umschließen jeweils je eins der Kondensatorelemente KE in dessen jeweiligen Umfangsrichtung UR2 mantelförmig und tragen und halten somit die Kondensatorelemente KE durch bspw. eine Haftreibung fest. Dabei weisen Halterabschnitte HA in deren jeweiligen Umfangsrichtung bzw. in der Umfangsrichtung UR2 der jeweiligen korrespondierenden Kondensatorelemente KE betrachtet keine homogene Breite auf. Vielmehr weisen die Halterabschnitte HA jeweils einen äußeren Bereich AB, jeweils einen inneren Bereich IB und zwei Dehnungsausgleichsbereiche DB auf, wobei die Dehnungsausgleichsbereiche DB den äußeren Bereich AB und den inneren Bereich IB in der Umfangsrichtung UR2 des jeweiligen Halterabschnitts HA miteinander körperlich verbinden. Dabei sind die Dehnungsausgleichsbereiche DB (in der Umfangsrichtung UR2 des jeweiligen Halterabschnitts HA bzw. des jeweiligen korrespondierenden Kondensatorelements KE betrachtet) im Vergleich zu dem äußeren und dem inneren Bereich AB, IB (mit einer wesentlich geringeren Breite) wesentlich schmaler ausgeführt. Die Dehnungsausgleichsbereiche DB sind durch ihre geringe Breite und durch das verwendete Material des Kondensatorhalters KH elastisch verformbar und können somit temperatur- bzw. altersbedingte Ausdehnungen der jeweiligen Kondensatorelemente KE in deren jeweiligen Umfang ausgleichen. Dadurch schützen die Dehnungsausgleichsbereiche DB die Halterabschnitte HA und somit das Kondensatorhalter KH vor Beschädigungen wie Brüchen durch die sich ausdehnenden Kondensatorelemente KE. Die äußeren Bereiche AB der Halterabschnitte HA, die eine äußere Begrenzung des Kondensatorhalters KH ausbilden, und die inneren Bereiche IB, die eine innere Begrenzung des Kondensatorhalters KH ausbilden, verleihen dem Kondensatorhalter KH die erforderliche mechanische Stabilität. Die Halterabschnitte HA sind in der Axialrichtung AR des Hohlraumes HR bzw. der Kondensatoranordnung KA auf zumindest einer Seite offen, um die Kondensatorelemente KE einbringen zu können.

Die Verbindungsabschnitte VA sind stegförmig ausgebildet und verbinden die Halterabschnitte HA miteinander körperlich. Dabei sind je zwei Verbindungsabschnitte VA zwischen je zwei benachbarten Halterabschnitten HA angeordnet. Jeweils einer der beiden Verbindungsabschnitte VA zwischen den jeweiligen zwei benachbarten Halterabschnitten HA verbindet die äußeren Bereiche AB der beiden Halterabschnitte HA in der Umfangsrichtung UR1 des Hohlraumes HR (bzw. des Kondensatorhalters KH) direkt miteinander. Jeweils ein anderer der beiden Verbindungsabschnitte VA zwischen den jeweiligen zwei benachbarten Halterabschnitten HA verbindet die inneren Bereiche IB der beiden Halterabschnitte HA in der Umfangsrichtung UR1 des Hohlraumes HR (bzw. des Kondensatorhalters KH) direkt miteinander. Dabei sind die Verbindungsabschnitte VA (in der Umfangsrichtung UR2 der jeweiligen korrespondierenden Halterabschnitte HA bzw. der jeweiligen korrespondierenden Kondensatorelemente KE betrachtet) im Vergleich zu den äußeren und den inneren Bereichen AB, IB der Halterabschnitte HA (mit einer wesentlich geringeren Breite) wesentlich schmaler ausgeführt. Die Verbindungsabschnitte VA sind durch ihre geringe Breite und durch das verwendete Material des Kondensatorhalters KH elastisch verformbar und können somit temperaturbedingte Ausdehnung des Kondensatorhalters KH ausgleichen.

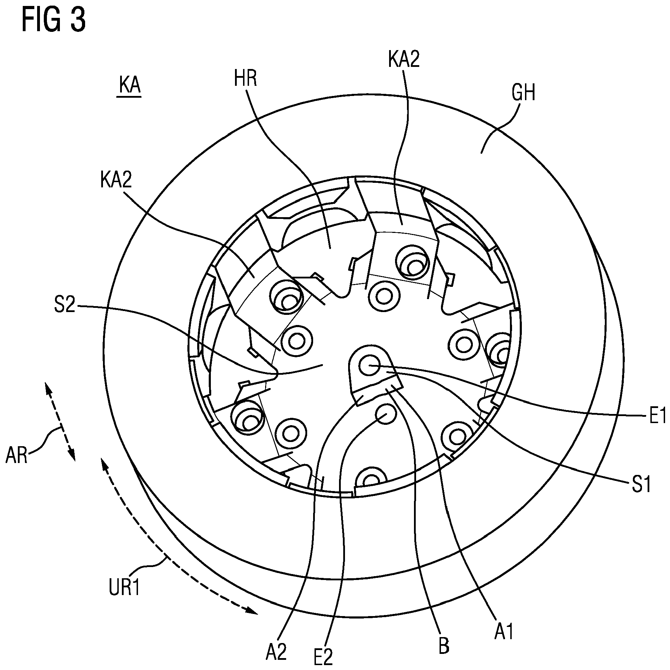

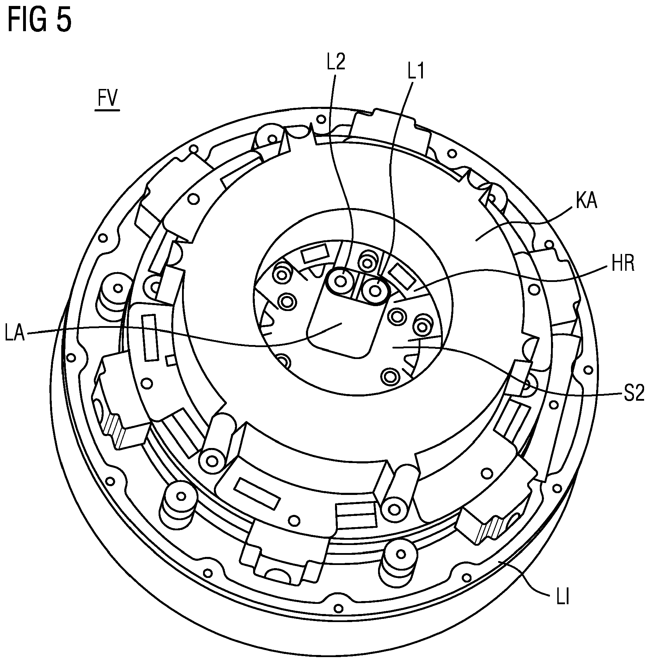

Die Kondensatoranordnung KA weist ferner eine erste Stromschiene S1 und eine zweite Stromschiene S2 (siehe Figur 3) auf, die elektrische Verbindungen von den jeweiligen Kondensatorelementen KE zu Stromleitern L1, L2 herstellen (siehe Figur 5). Dabei sind die Stromschienen S1, S2 aus einem Kupferblech durch bspw. Stanzen oder Laserstrahlschneiden geformt. Die Stromschienen S1, S2 sind im Wesentlichen formgleich ausgebildet und weisen jeweils ein kreisscheibenförmiges Mittelstück und jeweils sechs sich strahlenförmig von dem Mittelstück in der gleichen Ebene wegerstreckende Kontaktabschnitte KA1 bzw. KA2 auf (siehe Figur 3).

Die Stromschienen S1, S2 sind in dem Hohlraum HR oder in der Axialrichtung AR des Hohlraumes HR zu dem Hohlraum HR fluchtend, senkrecht zur Axialrichtung AR und zueinander überlappend angeordnet. Zur elektrischen Isolation der beiden Stromschienen S1, S2 voneinander weist die Kondensatoranordnung KA eine elektrisch isolierende Isolationsschicht auf, die zwischen den beiden Stromschienen S1, S2 angeordnet ist und die beiden Stromschienen S1, S2 miteinander körperlich verbindet und zugleich voneinander elektrisch isoliert.

Über sechs erste Kontaktabschnitte KA1, die sich strahlenförmig von dem kreisscheibenförmigen Mittelstück der ersten Stromschiene S1 wegerstrecken, ist die erste Stromschiene S1 mit jeweils einem ersten, positivspannungsseitigen Stromanschluss der jeweiligen Kondensatorelemente KE (bspw. durch Schweißverbindungen) körperlich und elektrisch verbunden. Analog ist die zweite Stromschiene S2 über sechs zweite Kontaktabschnitte KA2, die sich strahlenförmig von dem kreisscheibenförmigen Mittelstück der zweiten Stromschiene S2 wegerstrecken, mit jeweils einem zweiten, negativspannungsseitigen Stromanschluss der jeweiligen Kondensatorelemente KE (bspw. durch Schweißverbindungen) körperlich und elektrisch verbunden (siehe Figur 3).

Die erste Stromschiene S1 weist ein erstes elektrisches Anschlusselement E1 auf, das in dem mittleren Bereich des kreisscheibenförmigen Mittelstücks der ersten Stromschiene S1 geformt ist und eingerichtet ist, dass an dem ein erster, positivspannungsseitiger Stromleiter L1 zur Herstellung einer externen Stromverbindung der Kondensatoranordnung KA angeschlossen werden kann. Analog weist die zweite Stromschiene S2 ein zweites elektrisches Anschlusselement E2 auf, das in dem mittleren Bereich des kreisscheibenförmigen Mittelstücks der zweiten Stromschiene S2 geformt ist und eingerichtet ist, dass an dem ein zweiter, negativspannungsseitiger Stromleiter L2 zur Herstellung der externen Stromverbindung der Kondensatoranordnung KA angeschlossen werden kann (siehe Figur 3). Dabei sind die beiden Anschlusselemente E1, E2 jeweils in Form von einem Durchgangsloch (bzw. als eine Aussparung in der jeweiligen Stromschiene S1, S2) ausgebildet, in die die jeweiligen Stromleiter hindurchgeführt und an den jeweiligen Stromschienen S1, S2 bspw. durch Schraub-, Niet- oder Einpressverbindungen befestigt werden können. Ferner sind die beiden Anschlusselemente E1, E2 in der Axialrichtung AR des Hohlraumes HR betrachtet voneinander seitlich versetzt nebeneinander angeordnet.

Die erste Stromschiene S1 weist ferner eine erste Aussparung A1 in Form von einem weiteren Durchgangsloch zum Durchleiten des zweiten Stromleiters zu dem zweiten Anschlusselement E2 auf. Dabei ist die erste Aussparung A1 in der Axialrichtung AR des Hohlraumes HR betrachtet mit dem zweiten Anschlusselement E2 überlappend angeordnet. Dabei weist die erste Aussparung A1 einen vergleichsweise größeren Durchmesser als das zweite, ebenfalls als eine Aussparung ausgebildete Anschlusselement E2 auf. Dadurch fluchtet das zweite Anschlusselement E2 in der Axialrichtung AR des Hohlraumes HR mit einem Teil der ersten Aussparung A1.

Analog weist die zweite Stromschiene S2 eine zweite Aussparung A2 in Form von einem weiteren Durchgangsloch zum Durchleiten des ersten Stromleiters zu dem ersten Anschlusselement E1 auf. Dabei ist die zweite Aussparung A2 in der Axialrichtung AR des Hohlraumes HR betrachtet mit dem ersten Anschlusselement E1 überlappend angeordnet. Dabei weist die zweite Aussparung A2 einen vergleichsweise größeren Durchmesser als das erste, ebenfalls als eine Aussparung ausgebildete Anschlusselement E1 auf. Dadurch fluchtet das erste Anschlusselement E1 in der Axialrichtung AR des Hohlraumes HR mit einem Teil der zweiten Aussparung A2 (siehe Figur 3).

Die beiden Stromschienen S1, S2 sind aus einem Metallblech, bspw. einem Kupferblech oder einem Kupferlegierungsblech, gestanzt, geschnitten oder laserstrahlgeschnitten und zu den oben beschriebenen Formen geformt, bspw. gebogen.

Figur 3 zweigt die oben beschriebene Kondensatoranordnung KA in einer weiteren schematischen räumlichen Draufsicht.

Die Kondensatoranordnung KA weist ein Gehäuse GH auf, das bzw. ein Teil davon im Wesentlichen in Form von einem Kreisring ausgebildet ist und den Hohlraum HR umlaufend die zuvor beschriebenen Kondensatorelemente KE und den Kondensatorhalter KH samt den Halterabschnitten HA und den Verbindungsabschnitten VA umschließt.

In der Figur 3 ist die zweite Stromschiene S2 samt dem zweiten, als ein Durchgangsloch ausgebildeten Anschlusselement E2 und der zweiten Aussparung A2 dargestellt. Dabei ist auch eindeutig erkennbar, dass die zweite Stromschiene S1 mit der ersten Stromschiene S1 im Wesentlichen überlappend ausgeführt ist.

Ferner sind die überlappenden Anordnungen der zweiten Aussparung A2 mit dem ersten, als ein Durchgangsloch ausgebildeten Anschlusselement E1 bzw. der ersten Aussparung A1 mit dem zweiten Anschlusselement E2 eindeutig erkennbar.

Ferner sind die erste und die zweite Aussparung A1, A2 in der Axialrichtung AR des Hohlraumes HR zueinander teilweise fluchtend ausgeführt. Durch das teilweise Fluchten weisen die beiden Stromschienen S1, S2 einen gemeinsamen Bereich B auf, der sich ähnlich wie ein Durchgangsloch durch die beiden Stromschienen S1, S2 hindurcherstreckt. Der Bereich B ist dazu eingerichtet, die beiden zuvor genannten elektrischen Leiter L1, L2 an den beiden Stromschienen S1, S2 und somit an der Kondensatoranordnung KA auszurichten bzw. mechanisch zu befestigen.

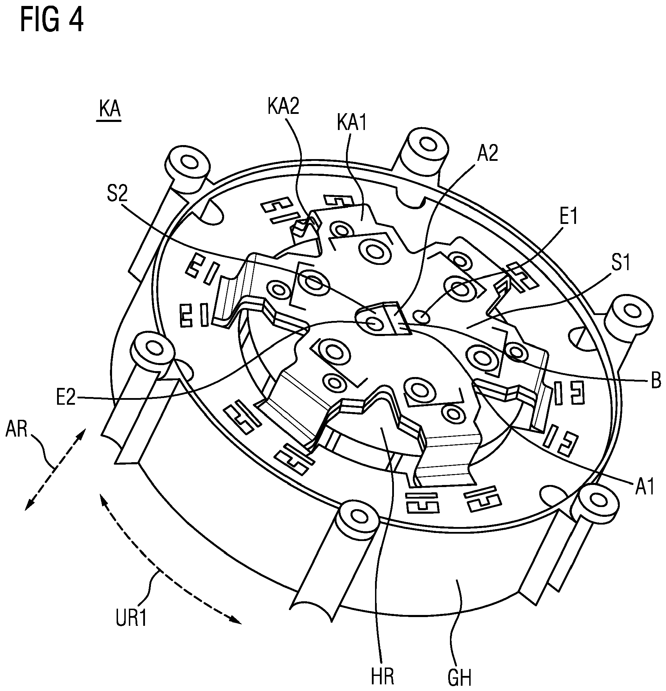

Figur 4 zweigt die oben beschriebene Kondensatoranordnung KA in einer schematischen räumlichen Druntersicht.

In Figur 4 sind die körperlichen und elektrischen Verbindungen der beiden Stromschienen S1, S2 zu den jeweiligen Kondensatorelementen KE schematisch abgebildet.

Die sechs Kondensatorelemente KE weisen jeweils einen positivspannungsseitigen Stromanschluss und einen negativspannungsseitigen Stromanschluss auf, die ähnlich wie bei dem in Figur 1 dargestellten Ringkondensator RK in Form von Anschlusslaschen AL1, AL2 mit jeweils einer flächig ausdehnten Kontaktfläche geformt sind. Dabei sind die Anschlusslaschen-Paare (der positivspannungsseitige Stromanschluss und der negativspannungsseitige Stromanschluss) der jeweiligen Kondensatorelemente KE (entsprechend der Anordnung der Kondensatorelemente KE zueinander) zueinander in der Umfangsrichtung UR1 des Hohlraumes HR äquidistant angeordnet. Die Kontaktflächen der Anschlusslaschen können sich parallel oder senkrecht zur Axialrichtung AR erstrecken. Alternativ können sich die Kontaktflächen der Anschlusslaschen der positivspannungsseitigen Stromanschlüsse aller Kondensatorelemente KE parallel zur Axialrichtung AR und die die Kontaktflächen der Anschlusslaschen der negativspannungsseitigen Stromanschlüsse aller Kondensatorelemente KE senkrecht zur Axialrichtung AR erstrecken (oder umgekehrt).

Die erste Stromschiene S1 ist über die sechs ersten Kontaktabschnitte KA1 mit den ersten, positivspannungsseitigen Stromanschlüssen der jeweiligen Kondensatorelemente KE körperlich und elektrisch verbunden. Dabei erstrecken sich die sechs ersten Kontaktabschnitte KA1 strahlenförmig von dem kreisscheibenförmigen Mittelstück der ersten Stromschiene S1 weg bis zu den Anschlusslaschen der jeweiligen korrespondierenden ersten positivspannungsseitigen Stromanschlüsse der jeweiligen Kondensatorelemente KE und sind mit den jeweiligen korrespondierenden Anschlusslaschen (bspw. durch Schweißverbindungen) flächig ausgedehnt, körperlich und elektrisch verbunden. Analog ist die zweite Stromschiene S2 über die sechs zweiten Kontaktabschnitte KA2 mit den zweiten, positivspannungsseitigen Stromanschlüssen der jeweiligen Kondensatorelemente KE körperlich und elektrisch verbunden. Dabei erstrecken sich die sechs zweiten Kontaktabschnitte KA2 strahlenförmig von dem kreisscheibenförmigen Mittelstück der zweiten Stromschiene S2 weg bis zu den Anschlusslaschen der jeweiligen korrespondierenden zweiten positivspannungsseitigen Stromanschlüsse der jeweiligen Kondensatorelemente KE und sind mit den jeweiligen korrespondierenden Anschlusslaschen (bspw. durch Schweißverbindungen) flächig ausgedehnt, körperlich und elektrisch verbunden. Damit verbinden die beiden Stromschienen S1, S2 die sechs Kondensatorelemente KE zueinander parallel zu einer externen elektrischen Komponente, wie z. B. einer externen Stromquelle. Durch die Parallelschaltung dieser sechs Kondensatorelemente KE bzw. der sechs Anschlusslaschen-Paare wird die gesamte Laschen-Induktivität der Kondensatoranordnung KA bis auf ein Sechstel reduziert.

Figur 5 zweigt in einer schematischen räumlichen Draufsicht ein Teil einer Fahrzeugantriebs-Leistungsinvertervorrichtung FV mit einer oben beschriebenen Kondensatoranordnung KA.

Die Vorrichtung FV weist neben der Kondensatoranordnung KA bspw. als einem Zwischenkreiskondensator einen Leistungs-Inverter LI zur Umwandlung eines Gleichstromes in einen mehrphasigen Wechselstrom und/oder umgekehrt auf, der gleichstromseitig an der Kondensatoranordnung KA elektrisch angeschlossen ist.

Die Vorrichtung FV weist eine Leiteranordnung LA auf, über die die Kondensatoranordnung KA an eine externe Gleichstromquelle angeschlossen werden kann. Die Leiteranordnung LA weist den zuvor genannten ersten stabförmigen, positivspannungsseitigen Stromleiter L1 und den zuvor genannten zweiten stabförmigen, negativspannungsseitigen Stromleiter L2 auf, die teils in einem elektrisch isolierenden, ebenfalls stabförmigen Kunststoffträger integriert sind.

Die Leiteranordnung LA befindet sich in dem Hohlraum HR und ist an den beiden Stromschienen S1, S2 mechanisch befestigt. Dabei erstreckt sich der erste Stromleiter L1 durch die zweite Aussparung A2 der zweiten Stromschiene S2 und das erste Anschlusselement E1 (in Form von einem Durchgangsloch) der ersten Stromschiene S1 und an der ersten Stromschiene S1 befestigt, wie z. B. verschraubt, vernietet oder verschweißt. Dadurch, dass die zweite Aussparung A2 einen vergleichsweise größeren Durchmesser als das erste, ebenfalls als eine Aussparung ausgebildete Anschlusselement E1 aufweist, berührt der erste Stromleiter L1 die Kante der zweiten Aussparung A2 und somit die zweite Stromschiene S2 nicht. Analog erstreckt sich der zweite Stromleiter L2 durch die erste Aussparung A1 der ersten Stromschiene S1 und das zweite Anschlusselement E2 der zweiten Stromschiene S2 und an der zweiten Stromschiene S2 befestigt, wie z. B. verschraubt, vernietet oder verschweißt. Dadurch, dass die erste Aussparung A1 einen vergleichsweise größeren Durchmesser als das zweite, ebenfalls als eine Aussparung ausgebildete Anschlusselement E2 aufweist, berührt der zweite Stromleiter L2 die Kante der ersten Aussparung A1 und somit die erste Stromschiene S1 nicht.

Dadurch, dass die beiden Stromschienen S1, S2 in dem Hohlraum HR oder in der Axialrichtung AR des Hohlraumes HR zu dem Hohlraum HR fluchtend angeordnet sind, ermöglichen diese bauraumsparende elektrische Verbindungen des Kondensators KD bzw. aller Kondensatorelemente KE zu der externen elektrischen Komponente, wie einer externen Gleichstromquelle.

Dadurch, dass die beiden Stromschienen S1, S2 zudem in der Axialrichtung AR übereinander angeordnet sind und miteinander überwiegend bzw. bis auf wenigen Bereichen nahezu vollständig fluchten, ermöglichen sie eine niederinduktive elektrische Verbindung von dem Kondensator KD bzw. dessen Kondensatorelementen KE zu der externen elektrischen Komponente.

Die elektrische Isolation der beiden Stromschienen S1, S2 voneinander erfolgt mittels einer
elektrisch isolierenden Isolationsschicht (Isolator), die zwischen den beiden Stromschienen S1, S2 angeordnet ist und die beiden Stromschienen S1, S2 miteinander körperlich verbindet und zugleich voneinander elektrisch isoliert.

Die Figur 5 zeigt somit eine Ausführungsform der Kondensatoranordnung KA, die einzelne Kondensatorelemente aufweist, die entlang einer geschlossenen Linie (Polygon bzw Kreislinie) umfänglich aneinandergereiht sind. Die Kondensatorelemente sind entlang der geschlossenen Linie ausgerichtet. In dem Inneren der Kondensatoranordnung KA, um die herum die Kondensatorelemente angeordnet sind, befinden sich zwei Stromschienen, mittels denen die Kondensatorwickel parallel verbunden sind. Die Stromschienen sind unterschiedliche Potentialen zugeordnet. Die Stromschienen weisen jeweils Kontaktabschnitte auf, die von einem zentralen Abschnitt abgehen, über den diese elektrisch verbunden sind. Die Kontaktabschnitte sind elektrisch mit Stromanschlüssen der Kondensatorelemente verbunden. Die Stromanschlüsse der Kondensatorelemente ragen (radial) in das Innere der Kondensatoranordnung KA hinein. Die Kontaktabschnitte der Stromschienen ragen (radial) zu den Stromanschlüsse hin. Die Stromschienen sind übereinander gestapelt (und von einem Isolator getrennt). Optionale Stromleiter führen von den Stromschienen (axial) weg und aus dem Inneren des Kondensators hinaus (zur weiteren Kontaktierung). Die elektrischen Verbindungen zwischen den Kondensatorelementen sind im Inneren des Kondensators vorgesehen. Dies gilt für beide Pole des Kondensators. Bei dem Kondensator der Figur 1 ist dies nicht der Fall. Die optionalen Stromleiter sind ebenso im Inneren des Kondensators angeordnet und ragen vorzugsweise aus dem Inneren des Kondensators bzw. aus einer Stirnseite hervor. Dies erlaubt eine einfache und induktionsarme Kontaktierung. Die Stromschienen sind an einer Stirnseite des Kondensators vorgesehen, wobei dies zum Inneren des Kondensators gezählt wird. Die dargestellten Stromleiter ragen aus der hierzu entgegengesetzten Stirnseite heraus, können jedoch auch durch dieselbe Stirnseite hindurchragen, an denen auch die Stromschienen vorgesehen sind.

Mit diesen Eigenschaften eignet sich die oben beschriebene Kondensatoranordnung KA optimal für leistungselektrische Anwendungen, wie in der oben genannten Fahrzeugantriebs-Leistungsinvertervorrichtung FV, bei denen es hohe Anforderungen an Bauraumreduktion und/oder niederinduktiven Stromverbindungen bei der Kondensatoranordnung gibt.

## Patentansprüche

1. Kondensatoranordnung (KA), aufweisend:
- einen Kondensator (KD), der einen Raum (HR) zumindest teilweise umlaufend ausgeführt ist;
- wobei der Kondensator (KD) erste, positivspannungsseitige Stromanschlüsse (SA1) und zweite, negativspannungsseitige Stromanschlüsse (SA2) aufweist;
- eine erste Stromschiene (S1), die mit den ersten Stromanschlüssen (SA1) elektrisch verbunden ist;
- eine zweite Stromschiene (S2), die mit den zweiten Stromanschlüssen (SA2) elektrisch verbunden ist;
- wobei sich die erste und die zweite Stromschiene parallel oder schräg zu einer Stirnseite des Raumes (HR) erstrecken;
- wobei die erste Stromschiene (S1) sternförmig oder kreisscheibenförmig mit strahlenförmig ausgehenden ersten Kontaktabschnitten (KA1) ausgeführt ist, wobei die ersten Kontaktabschnitte (KA1) jeweils mit je einem der ersten Stromanschlüsse (SA1) körperlich und elektrisch verbunden sind; und die zweite Stromschiene (S2) sternförmig oder kreisscheibenförmig mit strahlenförmig ausgehenden zweiten Kontaktabschnitten (KA2) ausgeführt ist, wobei die zweiten Kontaktabschnitte (KA2) jeweils mit je einem der zweiten Stromanschlüsse (SA2) körperlich und elektrisch verbunden sind,
**dadurch gekennzeichnet, dass**
- die erste Stromschiene (S1) ein erstes elektrisches Anschlusselement (E1) zum Anschließen eines ersten Stromleiters (L1) und eine erste Aussparung (A1) zum Durchleiten eines zweiten Stromleiters (L2) zu einem zweiten elektrischen Anschlusselement (E2) aufweist, und die zweite Stromschiene (S2) das zweite Anschlusselement (E2) zum Anschließen des zweiten Stromleiters (L2) und eine zweite Aussparung (A2) zum Durchleiten des ersten Stromleiters (L1) zu dem ersten Anschlusselement (E1) aufweist;
- wobei das erste Anschlusselement (E1) und die zweite Aussparung (A2) in der Axialrichtung (AR) des Raumes (HR) zueinander übereinander angeordnet sind, und das zweite Anschlusselement (E2) und die erste Aussparung (A1) in der Axialrichtung (AR) des Raumes (HR) zueinander übereinander angeordnet sind.

2. Kondensatoranordnung (KA) nach Anspruch 1, wobei die ersten Stromanschlüsse (SA1) und/oder die zweiten Stromanschlüsse (SA2) in einer Umfangsrichtung (UR1) des Raumes (HR) verteilt angeordnet sind.

3. Kondensatoranordnung (KA) nach Anspruch 1 oder 2, wobei die erste Stromschiene (S1) und die zweite Stromschiene (S2) in dem Raum (HR) oder in der Axialrichtung (AR) des Raumes (HR) fluchtend angeordnet sind.

4. Kondensatoranordnung (KA) nach einem der vorangehenden Ansprüche, wobei die erste Stromschiene (S1) und die zweite Stromschiene (S2) zueinander überlappend angeordnet sind.

5. Kondensatoranordnung (KA) nach einem der vorangehenden Ansprüche, ferner aufweisend:
- eine elektrisch isolierende Isolationsschicht;
- wobei die erste Stromschiene (S1), die Isolationsschicht und die zweite Stromschiene (S2) zueinander überlappend angeordnet sind;
- wobei die Isolationsschicht zwischen der ersten Stromschiene (S1) und der zweiten Stromschiene (S2) angeordnet ist, und die erste Stromschiene (S1) und die zweite Stromschiene (S2) miteinander körperlich verbindet und zugleich voneinander elektrisch isoliert.

6. Kondensatoranordnung (KA) nach einem der vorangehenden Ansprüche, wobei die erste Stromschiene (S1) und die zweite Stromschiene (S2) senkrecht zur Axialrichtung (AR) angeordnet sind.

7. Kondensatoranordnung (KA) nach einem der vorangehenden Ansprüche,
- wobei das erste Anschlusselement (E1) als eine dritte Aussparung in der ersten Stromschiene ausgebildet ist, wobei die dritte Aussparung einen kleinen Durchmesser aufweist als die zweite Aussparung (A2); und
- das zweite Anschlusselement (E2) als eine vierte Aussparung in der zweiten Stromschiene ausgebildet ist, wobei die vierte Aussparung einen kleinen Durchmesser aufweist als die erste Aussparung (A1).

8. Kondensatoranordnung (KA) nach einem der vorangehenden Ansprüche, wobei die erste Aussparung (A1) und die zweite Aussparung (A2) in der Axialrichtung (AR) des Raumes (HR) zueinander teilweise fluchtend ausgeführt sind.

9. Kondensatoranordnung (KA) nach einem der vorangehenden Ansprüche, wobei die erste Stromschiene (S1) und die zweite Stromschiene (S2) aus einem Metallblech, einem Kupferblech oder einem Kupferlegierungsblech gestanzt, geschnitten oder laserstrahlgeschnitten sind.

10. Kondensatoranordnung (KA) nach einem der vorangehenden Ansprüche, wobei der Kondensator (KD) mehrere voneinander körperlich getrennte Kondensatorelemente (KE) aufweist, die den Raum (HR) umlaufend angeordnet sind.

11. Kondensatoranordnung (KA) nach Anspruch 10, wobei der Kondensator (KD) ferner einen Kondensatorhalter (KH) zum Halten der Kondensatorelemente (KE) aufweist, der mehrere Halterabschnitte (HA), die jeweils einen der Kondensatorelemente (KE) tragen und festhalten, und mehrere Verbindungsabschnitte (VA) aufweist, die die Halterabschnitte (HA) miteinander körperlich verbinden.

12. Kondensatoranordnung (KA) nach Anspruch 11, wobei die Halterabschnitte (HA) jeweils je eins der Kondensatorelemente (KE) in dessen jeweiligen Umfangsrichtung (UR2) zumindest teilweise mantelförmig umschließen.

13. Kondensatoranordnung (KA) nach einem Ansprüche 11 oder 12, wobei die Halterabschnitte (HA) jeweils mindestens einen ersten Dehnungsausgleichsbereich (DB) aufweisen, der im Vergleich zum Rest des jeweiligen Kondensatorhalters (KH) schmaler und/oder dünner ausgeführt ist und eingerichtet ist, eine Ausdehnung des jeweiligen korrespondierenden Kondensatorelements (KE) in dessen Umfangsrichtung (UR2) auszugleichen.

14. Kondensatoranordnung (KA) nach einem Ansprüche 11 bis 13, wobei die Verbindungsabschnitte (VA) jeweils mindestens einen zweiten Dehnungsausgleichsbereich aufweisen, der im Vergleich zum Rest des jeweiligen Verbindungsabschnitts (VA) schmaler und/oder dünner ausgeführt ist und eingerichtet ist, eine Ausdehnung der Kondensatorelemente (KE) bzw. des Kondensators (KD) in einer Umfangsrichtung (UR1) des Kondensators (KD) auszugleichen.

15. Fahrzeugantriebs-Leistungselektronikvorrichtung (FV), aufweisend:
- eine Kondensatoranordnung (KA) nach einem der vorangehenden Ansprüche;
- einen Inverter (LI) zur Umwandlung eines Gleichstromes in einen mehrphasigen Wechselstrom und/oder umgekehrt, der Gleichstromanschlüsse zur Übertragung des Gleichstromes aufweist;
- wobei die Kondensatoranordnung (KA) an den Gleichstromanschlüssen elektrisch angeschlossen ist.

## Claims

1. Capacitor assembly (KA), having:
- a capacitor (KD), which is designed as extending at least partially around a space (HR);
- the capacitor (KD) having first, positive-voltage-side current terminals (SA1) and second, negative-voltage-side current terminals (SA2);
- a first bus bar (S1), which is electrically connected to the first current terminals (SA1);
- a second bus bar (S2), which is electrically connected to the second current terminals (SA2);
- the first and the second busbar extending parallel or obliquely to an end face of the space (HR);
- the first busbar (S1) being designed in the shape of a star or circular disc with radially extending first contact portions (KA1), the first contact portions (KA1) each being physically and electrically connected to one of the first current terminals (SA1); and
the second busbar (S2) being designed in the shape of a star or circular disc with radially extending second contact portions (KA2), the second contact portions (KA2) each being physically and electrically connected to one of the second current terminals (SA2),
**characterized in that**
- the first busbar (S1) has a first electrical terminal element (E1) for connecting a first current conductor (L1) and a first cutout (A1) for conducting a second current conductor (L2) through to a second electrical terminal element (E2); and the second busbar (S2) has the second terminal element (E2) for connecting the second current conductor (L2) and a second cutout (A2) for conducting the first current conductor (L1) through to the first terminal element (E1);
- the first terminal element (E1) and the second cutout (A2) being arranged one above the other in the axial direction (AR) of the space (HR), and the second terminal element (E2) and the first cutout (A1) being arranged one above the other in the axial direction (AR) of the space (HR).

2. Capacitor assembly (KA) according to Claim 1, the first current terminals (SA1) and/or the second current terminals (SA2) being arranged distributed in a circumferential direction (UR1) of the space (HR).

3. Capacitor assembly (KA) according to Claim 1 or 2, the first busbar (S1) and the second busbar (S2) being arranged in the space (HR) or in alignment in the axial direction (AR) of the space (HR).

4. Capacitor assembly (KA) according to one of the preceding claims, the first busbar (S1) and the second busbar (S2) being arranged overlapping one another.

5. Capacitor assembly (KA) according to one of the preceding claims, furthermore having:
- an electrically isolating insulation layer;
- the first busbar (S1), the insulation layer and the second busbar (S2) being arranged overlapping one another;
- the insulation layer being arranged between the first busbar (S1) and the second busbar (S2), and the first busbar (S1) and the second busbar (S2) being physically connected to one another and at the same time electrically isolated from one another.

6. Capacitor assembly (KA) according to one of the preceding claims, the first busbar (S1) and the second busbar (S2) being arranged perpendicularly to the axial direction (AR).

7. Capacitor assembly (KA) according to one of the preceding claims,
- the first terminal element (E1) being formed as a third cutout in the first busbar, the third cutout having a smaller diameter than the second cutout (A2); and
- the second terminal element (E2) being formed as a fourth cutout in the second busbar, the fourth cutout having a smaller diameter than the first cutout (A1).

8. Capacitor assembly (KA) according to one of the preceding claims, the first cutout (A1) and the second cutout (A2) being designed as partially aligned with one another in the axial direction (AR) of the space (HR).

9. Capacitor assembly (KA) according to one of the preceding claims, the first busbar (S1) and the second busbar (S2) being stamped, cut or laser-beam cut from a metal sheet, a copper sheet or a copper alloy sheet.

10. Capacitor assembly (KA) according to one of the preceding claims, the capacitor (KD) having a plurality of capacitor elements (KE) which are physically separate from one another and which are arranged extending around the space (HR).

11. Capacitor assembly (KA) according to Claim 10, the capacitor (KD) furthermore having a capacitor holder (KH) for holding the capacitor elements (KE), which has a plurality of holder portions (HA), which each support and securely hold one of the capacitor elements (KE), and a plurality of connecting portions (VA), which physically connect the holder portions (HA) to one another.

12. Capacitor assembly (KA) according to Claim 11, the holder portions (HA) each enclosing one of the capacitor elements (KE) in its respective circumferential direction (UR2) at least partially in the manner of a casing.

13. Capacitor assembly (KA) according to either of Claims 11 and 12, the holder portions (HA) each having at least one first expansion compensation area (DB), which is designed as narrower and/or thinner in comparison with the rest of the respective capacitor holder (KH) and is set up to compensate for expansion of the respective corresponding capacitor element (KE) in its circumferential direction (UR2).

14. Capacitor assembly (KA) according to one of Claims 11 to 13, the connecting portions (VA) each having at least one second expansion compensation area, which is designed as narrower and/or thinner in comparison with the rest of the respective connecting portion (VA) and is set up to compensate for expansion of the capacitor elements (KE) or the capacitor (KD) in a circumferential direction (UR1) of the capacitor (KD).

15. Vehicle-drive power electronics device (FV), having:
- a capacitor assembly (KA) according to one of the preceding claims;
- an inverter (LI) for converting a direct current into a multi-phase alternating current and/or vice versa, which has direct-current terminals for transferring the direct current;
- the capacitor assembly (KA) being electrically connected to the direct-current terminals.

## Revendications

1. Arrangement de condensateur (KA), possédant :
- un condensateur (KD) qui est réalisé de manière au moins partiellement circonférentielle à un espace (HR) ;
- le condensateur (KD) possédant des premières bornes électriques (SA1) côté tension positive et des deuxièmes bornes électriques (SA2) côté tension négative ;
- une première barre conductrice (S1) qui est connectée électriquement aux premières bornes électriques (SA1) ;
- une deuxième barre conductrice (S2) qui est connectée électriquement aux deuxièmes bornes électriques (SA2) ;
- les première et deuxième barres conductrices s'étendant parallèlement ou obliquement par rapport à un côté frontal de l'espace (HR) ;
- la première barre conductrice (S1) étant réalisée en forme d'étoile ou en forme de disque circulaire avec des premières portions de contact (KA1) émanant en forme de rayons, les premières portions de contact (KA1) étant respectivement reliées physiquement et électriquement à chaque fois à l'une des premières bornes électriques (SA1) ; et
la deuxième barre conductrice (S2) étant réalisée en forme d'étoile ou en forme de disque circulaire avec des deuxièmes portions de contact (KA2) émanant en forme de rayons, les deuxièmes portions de contact (KA2) étant respectivement reliées physiquement et électriquement à chaque fois à l'une des deuxièmes bornes électriques (SA2),
**caractérisé en ce que**
- la première barre conductrice (S1) possède un premier élément de raccordement électrique (E1) destiné au raccordement d'un premier conducteur électrique (L1) et un premier évidement (A1) destiné au passage d'un deuxième conducteur électrique (L2) vers un deuxième élément de raccordement électrique (E2) ; et la deuxième barre conductrice (S2) possède le deuxième élément de raccordement (E2) destiné au raccordement du deuxième conducteur électrique (L2) et un deuxième évidement (A2) destiné au passage du premier conducteur électrique (L1) vers le premier élément de raccordement (E1) ;
- le premier élément de raccordement (E1) et le deuxième évidement (A2) étant disposés l'un au-dessus de l'autre dans la direction axiale (AR) de l'espace (HR), et le deuxième élément de raccordement (E2) et le premier évidement (A1) étant disposés l'un au-dessus de l'autre dans la direction axiale (AR) de l'espace (HR).

2. Arrangement de condensateur (KA) selon la revendication 1, les premières bornes électriques (SA1) et/ou les deuxièmes bornes électriques (SA2) étant disposées de manière distribuée dans une direction circonférentielle (UR1) de l'espace (HR).

3. Arrangement de condensateur (KA) selon la revendication 1 ou 2, la première barre conductrice (S1) et la deuxième barre conductrice (S2) étant alignées dans l'espace (HR) ou dans la direction axiale (AR) de l'espace (HR).

4. Arrangement de condensateur (KA) selon l'une des revendications précédentes, la première barre conductrice (S1) et la deuxième barre conductrice (S2) étant disposées de manière à se chevaucher l'une l'autre.

5. Arrangement de condensateur (KA) selon l'une des revendications précédentes, possédant en outre:
- une couche d'isolation électriquement isolante ;
- la première barre conductrice (S1), la couche d'isolation et la deuxième barre conductrice (S2) étant disposées de manière à se chevaucher les unes les autres ;
- la couche d'isolation étant disposée entre la première barre conductrice (S1) et la deuxième barre conductrice (S2), et reliant physiquement la première barre conductrice (S1) et la deuxième barre conductrice (S2) l'une à l'autre tout en les isolant électriquement l'une de l'autre.

6. Arrangement de condensateur (KA) selon l'une des revendications précédentes, la première barre conductrice (S1) et la deuxième barre conductrice (S2) étant disposées perpendiculairement à la direction axiale (AR) .

7. Arrangement de condensateur (KA) selon l'une des revendications précédentes,
- le premier élément de raccordement (E1) étant réalisé sous la forme d'un troisième évidement dans la première barre conductrice, le troisième évidement présentant un diamètre plus petit que le deuxième évidement (A2) ; et
- le deuxième élément de raccordement (E2) étant réalisé sous la forme d'un troisième évidement dans la première barre conductrice, le troisième évidement présentant un diamètre plus petit que le premier évidement (A1).

8. Arrangement de condensateur (KA) selon l'une des revendications précédentes, le premier évidement (A1) et le deuxième évidement (A2) étant réalisés partiellement dans l'alignement l'un de l'autre dans la direction axiale (AR) de l'espace (HR).

9. Arrangement de condensateur (KA) selon l'une des revendications précédentes, la première barre conductrice (S1) et la deuxième barre conductrice (S2) étant estampées, découpées ou découpées au laser dans une tôle métallique, une tôle de cuivre ou une tôle d'alliage de cuivre.

10. Arrangement de condensateur (KA) selon l'une des revendications précédentes, le condensateur (KD) possédant plusieurs éléments condensateurs (KE) physiquement séparés les uns des autres, lesquels sont disposés de manière circonférentielle à l'espace (HR).

11. Arrangement de condensateur (KA) selon la revendication 10, le condensateur (KD) possédant en outre un porte-condensateur (KH) destiné à maintenir les éléments condensateurs (KE), lequel possède plusieurs portions de maintien (HA), chacune supportant et retenant l'un des éléments condensateurs (KE), et plusieurs portions de connexion (VA), lesquelles relient physiquement les portions de maintien (HA) entre elles.

12. Arrangement de condensateur (KA) selon la revendication 11, les portions de maintien (HA) entourant respectivement au moins partiellement en forme d'enveloppe à chaque fois l'un des éléments condensateurs (KE) dans sa direction périphérique (UR2) respective.

13. Arrangement de condensateur (KA) selon l'une des revendications 11 ou 12, les portions de maintien (HA) possédant respectivement au moins une première zone de compensation de dilatation (DB), laquelle est réalisée plus étroite et/ou plus mince par rapport au reste du porte-condensateur (KH) respectif, et qui est conçue pour compenser une dilatation de l'élément condensateur (KE) correspondant respectif dans sa direction périphérique (UR2) .

14. Arrangement de condensateur (KA) selon l'une des revendications 11 à 13, les portions de connexion (VA) possédant chacune au moins une deuxième zone de compensation de dilatation, laquelle est réalisée plus étroite et/ou plus mince par rapport au reste de la portion de connexion (VA) respective, et qui est conçue pour compenser une dilatation des éléments condensateurs (KE) ou du condensateur (KD) dans une direction périphérique (UR1) du condensateur (KD).

15. Dispositif électronique de puissance de propulsion de véhicule (FV), comprenant :
- un arrangement de condensateur (KA) selon l'une des revendications précédentes ;
- un onduleur (LI) destiné à la conversion d'un courant continu en un courant alternatif polyphasé et/ou inversement, qui possède des bornes à courant continu servant à la transmission du courant continu ;
- l'arrangement de condensateur (KA) étant raccordé électriquement aux bornes à courant continu.
